# EUROPEAN PATENT APPLICATION

(11) **EP 3 470 661 A1**
(43) Date of publication of application: **17.04.2019**
(21) Application number: 17195750.9
(22) Date of filing: 10.10.2017
(51) Int. Cl.: F02M 55/02, F02M 69/46, B29D 99/00

(54) **A FUEL RAIL ASSEMBLY FOR AN INTERNAL COMBUSTION ENGINE AND A METHOD FOR ITS MANUFACTURE**

(71) Applicant: Continental Automotive GmbH, 30165 Hannover (DE)
(72) Inventor: Serra, Giandomenico, 56010 Ghezzano - S.Giuliano Terme (PI) (IT); Mechi, Marco, 57016 Vada (LI) (IT); Di Domizio, Gisella, 56017 San Giuliano Terme (IT)

(57) **Abstract**

A fuel rail assembly (2) for a fuel injection system for an internal combustion engine, the assembly (2) comprising a fuel rail (4) forming a reservoir for fuel and having an inlet port (6) through which fuel is supplied at pressure to the reservoir, and a plurality of outlet ports spaced along the fuel rail each being in hydraulic connection with an associated fuel injector. The fuel rail (4) comprises a mouldable body moulded to the inlet port (6), and the interface between the mouldable body and the inlet port (6) is profiled having projections (40a-40d).

## Description

The present disclosure relates to a fuel rail assembly for an internal combustion engine, particularly but not exclusively, to a fuel rail assembly for a multi-cylinder gasoline direct injection engine, and to a method of manufacture of the fuel rail assembly.

A fuel rail assembly comprises a fuel reservoir in the form of an elongate fuel rail of generally tubular configuration to which fuel is supplied at high-pressure into an inlet port of the fuel rail by a fuel pump. Spaced along the fuel rail are a plurality of fuel delivery outlets for hydraulically coupling the fuel rail to the individual fuel injectors which are operable to inject fuel into the engine.

The operating environment of a fuel rail typically involves high temperatures, vibration and operational stresses in the vehicle in addition to the stresses caused by the high pressure in the fuel rail. Consequently, difficulties may arise when seeking to secure components to a fuel rail and provide reliable sealing of joints between the fuel rail and the components.

Therefore, fuel rail assemblies with reliable sealing between two or more parts would be desirable and it is an object of the present disclosure to specify such a fuel rail assembly. It is a further object to specify a method for manufacturing the fuel rail assembly.

These objects are achieved by a fuel rail assembly and a method according to the independent claims. Advantageous embodiments and developments of the assembly and the method are disclosed in the dependent claims, the following description and the drawings . According to the present disclosure there is provided a fuel rail assembly for a fuel injection system for an internal combustion engine, the assembly having a fuel rail forming a reservoir for fuel and comprising an elongate body having an inlet port through which fuel is supplied at pressure to the reservoir, and a plurality of outlet ports spaced along the fuel rail.

Each outlet port is hydraulically connectable to an associated fuel injector. In one embodiment, the assembly also comprises the fuel injectors. In this case, each outlet port may expediently be in hydraulic connection with an associated fuel injector. In the present context "hydraulically connectable" and "hydraulic connection" are in particular understood to mean that the outlet ports are fluid-tightly connectable and connected, respectively, to the respective associated injectors in such fashion that fluid may flow from the fuel rail through the outlet port into the injector.

The fuel rail comprises a body formed of a mouldable material and being moulded to the inlet port, wherein the interface between the mouldable body and the inlet port is profiled having projections on the inlet port forming recesses in which the mouldable material is received.

The fuel assembly includes a connection between two parts, i.e. the inlet port and the fuel rail, whereby one part forms recesses in the other part to provide a fluid tight seal between the two parts. The inlet port may comprise a metal or alloy. The body of the fuel rail comprises a mouldable material, preferably a plastic, which is moulded to the inlet port. In order to improve the mechanical connection between the fuel rail and the inlet port, the inlet port comprises projections that form recesses for receiving the moulding material.

The projections are arranged on the outer surface of the inlet port and provide an interface profile which acts to increase the surface area of the interface between the inlet port and the mouldable material so as to improve the reliability of the connection between the inlet port and the fuel rail, particularly in view of the operating environment of a fuel rail which involves high temperatures, vibration and operational stresses in the vehicle in addition to the stresses caused by the high pressure in the fuel rail.

The mouldable material may comprise a plastic, for example. The use of a plastics material for the body of the fuel rail has advantages in terms of lower weight, cost of material and manufacturing cost.

The projections may comprise a screw thread or corrugations, and the spacings between the projections along the longitudinal axis of the fuel rail may vary, and preferably may vary in the direction away from the inlet port of the fuel rail into the body of the fuel rail. The dimensions of the projections may preferably vary in the radial direction and/or in the direction of the longitudinal axis.

By these means, the interface connection between the mouldable body of the fuel rail and the inlet port is substantially increased and this long path which reduces the risk of pressurised fuel leaking along the interface to the exterior.

Preferably, the interface profiles of the projections have radii at the junctions between their radially extending faces and the adjacent longitudinal extending faces to assist the flow of mouldable material during the moulding process into the recesses formed between the projections. At its inner end, the end of the inlet port may have a frusto-conical profile to assist the flow of mouldable material, in particular the flow of the mouldable material over the projections.

In a preferred embodiment, an annular recess is formed between the fuel rail body and the inlet port, an O-ring being located in the recess to seal between the inlet port and the fuel rail body and being retained therein by a retaining ring. This additional seal, when provided, provides additional protection preventing the leakage of pressurised fuel through the interface to the exterior.

In a further preferred embodiment, the inlet port comprises a fuel inlet member threadedly engaged with an outer sleeve, the fuel rail being moulded to the outer sleeve. This arrangement has the advantage that the mounting of the outer sleeve in the mould is simpler to arrange and there is less risk of damage to the fuel inlet member during the moulding process. The outer sleeve can be considered to be an adapter between the inlet port and the body of the fuel rail and may be used to simplify manufacture of the connection between a pre-fabricated or standard part providing the inlet port and the fuel rail.

In other embodiments, the inlet port consists of a single component.

Preferably, the mouldable body is formed of a plastics material, which may be reinforced with fibres, for example comprising glass or carbon fibres. A fibre-reinforced plastic may be useful for increasing the strength of the body.

The present disclosure also provides a method of manufacturing a fuel rail assembly having a fuel rail formed of a mouldable material, the method including provision of a mould for forming the fuel rail, the mould being adapted to receive an inlet port located therein onto which the fuel rail body is moulded by injection moulding, the interface between the inlet port and the moulded body being profiled by projections on the inlet port defining recesses therebetween for receiving moulding material during the moulding process.

In a preferred method, the mouldable material comprises a plastics material, which may be reinforced with glass or carbon fibres.

Preferred embodiments of the present invention will now be described by way of example with reference to the accompanying drawings, in which:
- Figure 1: shows an end view of a fuel rail assembly.
- Figure 2: shows a sectional side view along the line A-A of the fuel rail assembly with an injector valve connected thereto, and
- Figure 3: shows an enlarged sectional view of part of the fuel rail shown in Figure 2.

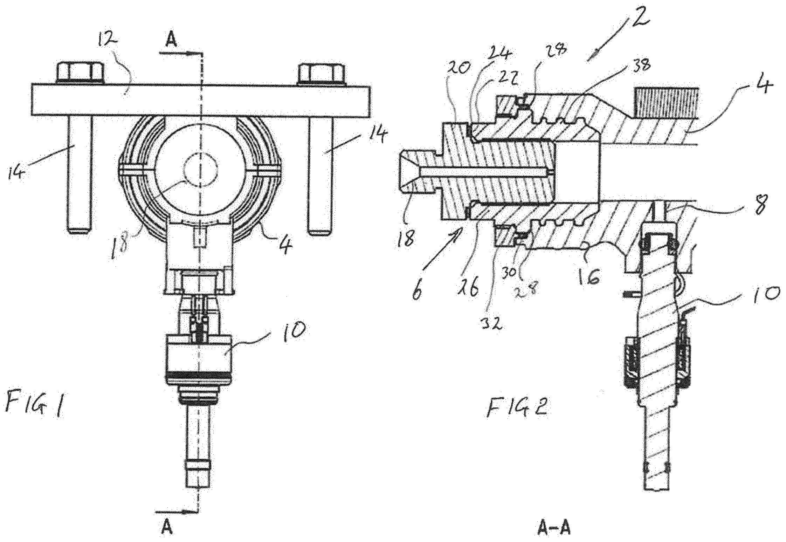

Referring now to Figure 1 and 2, there is shown part of a fuel rail assembly 2 for a gasoline direct injection internal combustion engine (not shown), which comprises an elongate fuel rail 4 forming a fuel reservoir. In this embodiment, the fuel rail is formed of a mouldable material, such as a plastics material, for example a thermo-setting plastics material, which is moulded into the desired form by injection moulding. In use, fuel at a high-pressure is supplied to an inlet port 6 of the fuel rail 4 by a pressure pump (not shown). The inlet port 6 may comprises a metal or alloy. Spaced along its length, the fuel rail 2 has a plurality of fuel outlets 8, only one of which is shown, each of which forms a fuel delivery passage by which fuel is supplied to the associated fuel injector 10. In this installation, the fuel rail assembly 2 is intended for a direct injection gasoline engine in which the fuel injectors are operable to inject fuel directly into a respective combustion chamber of the engine. Only one fuel injector 10 is shown but it will be understood that there will be one such system for each cylinder of the engine. In other embodiments, the fuel injector or injectors inject fuel into the engine manifold.

As shown in Figure 1, the fuel rail assembly 2 is secured to the engine by one or more fixing plates 12 each secured to the engine by means of two fixing bolts 14.

Referring now to Figure 2, in this particular embodiment, the inlet port 6 is located at one end of the fuel rail and comprises an assembly of two parts, an outer sleeve 16 of generally tubular form and an inner fuel inlet 18 which is screw threadedly engaged with the outer sleeve 16. The fuel inlet 18 has a annular shoulder 20 which abuts an end face 22 of the outer sleeve 16 with a flat sealing washer 24 disposed therebetween.

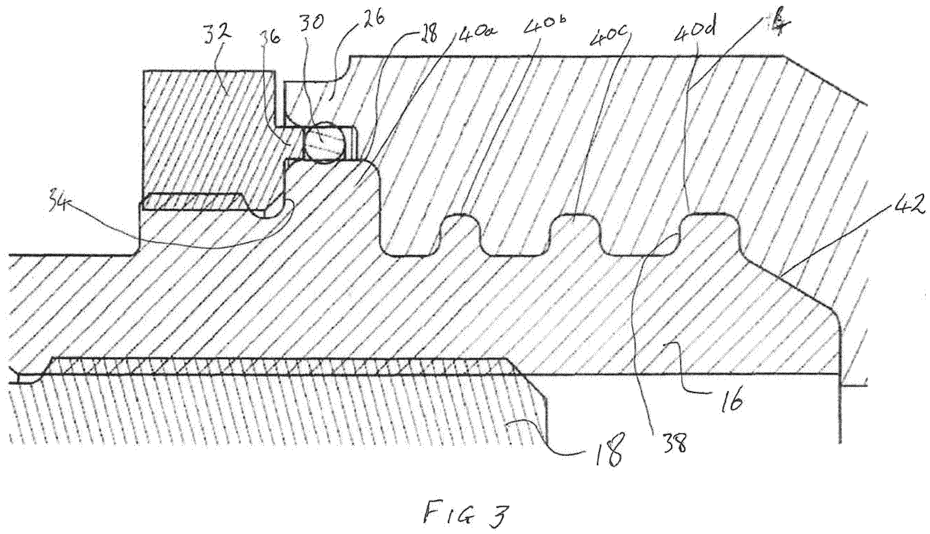

Referring now to Figure 2 and Figure 3, the fuel rail 4 has adjacent its outer periphery a longitudinally extending extension 26 spaced radially from an outer peripheral surface 28 on the outer sleeve 16 to form an annular recess adapted to receive a resilient sealing ring 30. The sealing ring 30 is maintained in position by a retaining ring 32 which is screwed onto the outer sleeve 16 to abut a radially extending face 34 of the outer sleeve 16. The sealing ring 30 has an annular projection 36 which engages with the sealing ring 30 to maintain the ring in the correct position. By this means, an additional seal is provided to further increase the resistance to leakage along the interface path.

The interface 38 between the body of the fuel rail 4 and the outer sleeve 16 is profiled to provide a long sealing surface between the two components to minimise the risk of fuel leaking from the fuel rail to the exterior atmosphere through the interface. In this embodiment, the interface comprises four concentric corrugations 40a-40d. The longitudinally outermost corrugation 40a has a greater radial extent than the other corrugations 40b-40d and has on its outer peripheral surface 28 the seating for the resilient sealing ring 30.

In the illustrated embodiment, the remaining three corrugations may have substantially the same outer diameter but their axial extent or width increases toward the inner end of the fuel rail 4 and the spacing between the adjacent corrugations also increases in this direction. However, the number of projections or corrugations, their individual shape and the shape and spacing relative to one another may vary. Each corrugation 40b-40d has substantially radially extending side faces and the change in direction of each face to its adjacent longitudinal face is radial. In this way, sharp edges which could adversely affect the free flow of moulding material during the moulding process is obviated. In further embodiments, the corrugations may be formed of a single or double screw thread.

The innermost end of the outer sleeve 16 has a frusto-conical surface 42 to assist the flow of moulding material during the moulding operation.

To manufacture the fuel rail assembly, the outer sleeve 16 is located and secured in position in a fuel rail mould and a molten thermosetting plastics material is injected under pressure into the mould where it forms a tight fluid pressure seal between the outer sleeve 16 and the moulded body of the fuel rail 4.

After the moulding process has been completed the fuel rail 4 and the outer sleeve 16 now firmly bonded to the fuel rail are removed from the mould and the assembly completed by inserting the resilient sealing ring and securing it in position by means of the retaining ring 32 and then securing the fuel inlet 18 to the outer sleeve 16.

In another embodiment of the invention, the outer sleeve 16 and the fuel inlet 18 are integrally formed so that the inlet port 6 consists of just one component.

It is also envisaged that a mounting for the fuel injector(s) could also be moulded in a similar manner into the fuel rail 4 while this is being formed. Although described with reference to the use of a thermosetting plastics material, it is possible that other materials and techniques could be used. It is possible that the fuel rail could be formed of for example a diecast metal material. It is also possible that as the molten material in the mould approaches a defined transition towards the solid state the interface region of the fuel rail could be subjected to external pressure forces by a roller for example to ensure that no leakage paths remain in the interface 38.

## Claims

1. A fuel rail assembly (2) for a fuel injection system for an internal combustion engine, the assembly having a fuel rail (4) forming a reservoir for fuel and comprising an elongate body having an inlet port (6) through which fuel is supplied at pressure to the reservoir, and a plurality of outlet ports (8) spaced along the fuel rail (4) each being hydraulically connectable with an associated fuel injector (10), wherein the fuel rail (4) comprises a body formed of a mouldable material and being moulded to the inlet port (6), wherein the interface (38) between the fuel rail (4) and the inlet port (6) is profiled having projections (40a-40d) on the inlet port (6) forming recesses in which the mouldable material is received.

2. A fuel rail assembly (2) according to claim 1, in which the projections (40a-40d) comprise a screw thread or corrugations.

3. A fuel rail assembly (2) according to claim 1 or 2, wherein the spacing between the projections (40a-40d) along the longitudinal axis of the fuel rail varies.

4. A fuel rail assembly (2) according to claim 1, 2 or 3, wherein the said spacing increases in the direction away from the inlet port (6) of the fuel rail (4).

5. A fuel rail assembly (2) according to according to any one of claims 1 to 4, wherein the dimensions of the projections (40a-40d) vary in the radial direction.

6. A fuel rail assembly (2) according to any one of claims 1 to 5, wherein the interface profiles of the projections (40a-40d) have radii at the junctions between their radially extending faces and the adjacent longitudinal extending faces.

7. A fuel rail assembly (2) according to any one of the preceding claims, wherein an inner end of the inlet port (6) has a frusto-conical profile (42) to assist the flow of mouldable material.

8. A fuel rail assembly (2) according to any one of the preceding claims, wherein an annular recess is formed between the fuel rail body and the inlet port (6), a resilient sealing ring (30) being located in the recess to seal between the inlet port (6) and the fuel rail body (4) and being retained therein by a retaining ring (32).

9. A fuel rail assembly (2) according to any one of the preceding claims in which the inlet port (6) comprises a fuel inlet (18) threadedly engaged with an outer sleeve (16), the fuel rail (4) being moulded to the outer sleeve (16).

10. A fuel rail assembly (2) according to any one of the preceding claims, in which the mouldable body of the fuel rail (4) is formed of a plastics material.

11. A fuel rail assembly (2) according to claim 10, wherein the plastics material is reinforced with fibres comprising glass or with carbon fibres.

12. A method of manufacturing a fuel rail assembly having a fuel rail formed of a mouldable material, the method including provision of a mould for forming the fuel rail, the mould being adapted to have an inlet port located therein onto which the fuel rail body is moulded by injection moulding, the interface between the inlet port and the moulded body being profiled by projections on the inlet port defining recesses therebetween for receiving moulding material during the moulding process.

13. A method of manufacturing a fuel rail assembly according to claim 12, in which the mouldable material comprises a plastics material.

14. A method of manufacturing a fuel rail assembly according to claim 12 wherein the plastics material is reinforced with glass or carbon fibres.
